# EUROPÄISCHE PATENTANMELDUNG

(11) **EP 2 940 269 A1**
(43) Veröffentlichungstag der Anmeldung: **04.11.2015**
(21) Anmeldenummer: 15165616.2
(22) Anmeldetag: 29.04.2015
(51) Int. Cl.: F02B 37/10, F02B 37/14, F02B 37/24, F02B 37/18, F02B 37/22, F02B 37/12, F02B 33/40, F02D 41/00, F02D 41/06, F02D 41/02, F02B 39/10

(54) **VERFAHREN ZUM BETRIEB EINES KRAFTFAHRZEUGS**

(30) Priorität: 29.04.2014 DE 102014208092
(71) Anmelder: Mahle International GmbH, 70376 Stuttgart (DE)
(72) Erfinder: Naujoks, Sascha, 76327 Pfinztal (DE); Streng, Simon, 70327 Stuttgart (DE)
(74) Vertreter: BRP Renaud & Partner mbB Rechtsanwälte Patentanwälte Steuerberater

(57) **Zusammenfassung**

Die Erfindung betrifft ein Verfahren zum Betrieb eines Kraftfahrzeugs mit einer Brennkraftmaschine mit einem mittels einer Regeleinrichtung regelbaren Abgasturbolader und einem elektrisch betriebenen Verdichter und mit einem elektrischen Energiespeicher sowie einem Generator zum Laden derselben, bei welchem ab einem vordefinierten Ladezustand des elektrischen Energiespeichers und/oder einer von dem Generator erzeugten elektrischen Leistung die Ladeluft primär mittels des elektrisch betriebenen Verdichters verdichtet wird und gleichzeitig die Regeleinrichtung in eine Stellung überführt wird, in welcher ein Abgasgegendruck des Abgasturboladers zumindest reduziert wird.

Hierdurch kann ein energiesparender Betrieb der Brennkraftmaschine erzielt werden.

## Beschreibung

Die vorliegende Erfindung betrifft ein Verfahren zum Betrieb eines Kraftfahrzeuges mit einer Brennkraftmaschine. Die Erfindung betrifft außerdem ein Kraftfahrzeug mit einer Brennkraftmaschine.

In modernen Kraftfahrzeugen mit Brennkraftmaschinen wird häufig ein Abgasturbolader zur Verdichtung der Ladeluft eingesetzt, um die Zylinderfüllung zu erhöhen und damit die Leistung der Brennkraftmaschine steigern zu können. Die hierfür benötigte Verdichtungsenergie wird somit aus der Abgasenergie der Brennkraftmaschine erzeugt, wobei die Umwandlung durch eine mit dem Verdichter (frischluftseitig) mechanisch gekoppelte Turbine im Abgasstrang erfolgt, die von dem Abgasstrom angetrieben wird. Eine Regelung der Ladeleistung des Abgasturboladers kann durch ein Wastegateventil oder aber durch eine variable Turbinengeometrie, das heißt durch die Verstellung eines effektiven Einströmquerschnitts in die Turbine des Abgasturboladers erfolgen.

Zusätzlich zu dem zuvor beschriebenen Abgasturbolader kann auch eine Maschine eingesetzt werden, welche die benötigte Verdichtungsenergie aus elektrischer Energie wandelt, das heißt beispielsweise ein elektrischer Zusatzverdichter. Bisherige Regelstrategien bei Abgasturboladern sahen vor, dass im Falle eines Wastegateturboladers das Wastegate bzw. bei einem VTG-Turbolader die Leitschaufeln der variablen Turbinengeometrie hinsichtlich ihres Anströmwinkels derart angepasst werden, dass ein Soll-Ladedruck exakt eingestellt werden kann.

Aus der DE 103 22 481 A1 ist ein Verfahren zum Betrieb einer Brennkraftmaschine mit einem elektrisch betriebenen Verdichter bekannt, das eine schnellere Aufheizung einer Abgasnachbehandlungsvorrichtung ermöglicht. Der elektrisch betriebene Verdichter (Zusatzverdichter) wird dabei insbesondere während eines Startvorgangs der Brennkraftmaschine aktiviert.

Aus der DE 10 2005 015 999 A1 ist ein Verfahren zur Katalysatoraufheizung bei einer Brennkraftmaschine mit einem Abgasturbolader und einer variablen Nockenwellenverstellung bekannt, bei welchem der Druck in einer Zuluftführung gegenüber einem Abgasgegendruck in einer Abgasführung erhöht wird und mittels der Nockenwellenverstellung die Öffnungszeiten der Einlassventile und die Öffnungszeiten der Auslassventile eines jeweiligen Zylinders zumindest teilweise zur Überschneidung gebracht werden. Hierdurch soll ohne Mehraufwand und unter Nutzung vorhandener Einrichtungen erreicht werden, dass die Katalysatoranordnung in der Kaltstartphase bzw. nach Abkühlung effizient ihre notwendige Betriebstemperatur erlangen kann, welche für eine vollständige Abgasreinigung Voraussetzung ist.

Aus der DE 100 23 022 A1 ist eine aufgeladene Brennkraftmaschine mit mindestens einstufiger Aufladung durch einen Abgasturbolader bekannt. Vorgesehen ist zusätzlich zumindest ein Zusatzverdichter, der mit dem Abgasturbolader parallel oder in Reihe geschaltet ist, wobei der Zusatzverdichter einen vom Arbeitsmediumkreislauf der Brennkraftmaschine unabhängigen Antrieb aufweist.

Die vorliegende Erfindung beschäftigt sich mit dem Problem, ein Verfahren zum Betrieb eines Kraftfahrzeugs anzugeben, mittels welchem insbesondere ein kraftstoffsparender Betrieb erreicht werden kann.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen elektrisch betriebenen Verdichter zusätzlich zu einem ohnehin in einem Kraftfahrzeug eingesetzten regelbaren Abgasturbolader einzusetzen und lediglich dann zu betreiben, wenn genügend bzw. sogar überschüssige elektrische Energie zum Betrieb des elektrisch betriebenen Verdichters zur Verfügung steht. Steht solche Energie, beispielsweise aufgrund eines Rekuperationsbetriebs zur Verfügung, kann gleichzeitig eine Regeleinrichtung des regelbaren Abgasturboladers in eine Stellung überführt werden, in welcher der Abgasgegendruck des Abgasturboladers zumindest reduziert wird. Bei dem erfindungsgemäßen Verfahren zum Betrieb eines Kraftfahrzeugs mit einer Brennkraftmaschine mit einem mittels der zuvor beschriebenen Regeleinrichtung regelbaren Abgasturbolader und dem ebenfalls zuvor beschriebenen elektrisch betriebenen Verdichter wird somit die elektrische Energie eines elektrischen Energiespeichers bzw. eines Generators verwendet, indem ab einem vordefinierten Ladezustand des elektrischen Energiespeichers und/oder einer von dem Generator erzeugten elektrischen Leistung die Ladeluft primär mittels des elektrisch betriebenen Verdichters verdichtet und gleichzeitig die Regeleinrichtung in die ebenfalls zuvor beschriebene Stellung überführt wird, in welcher der Abgasgegendruck des Abgasturboladers zumindest reduziert ist. Das Druckverhältnis, welches durch den elektrisch betriebenen Verdichter erzeugt wird, ist dabei vorzugsweise größer als das Druckverhältnis, welches der Verdichter des Abgasturboladers erzeugt. Da die Ladeluft in diesem Betriebszustand größtenteils durch den elektrisch betriebenen Verdichter bereitgestellt wird, kann der Abgasturbolader entlastet werden. Bei einem Wastegateturbolader bedeutet dies, das Wastegateventil vorzugsweise nahezu vollständig geöffnet ist. Bei einem VTG-Turbolader werden die Leitschaufeln derart eingestellt, dass der Anströmquerschnitt nahe dem Maximum liegt. Durch diese Maßnahmen kann bei gleichem Ladedruck, erzeugt durch den elektrisch betriebenen Verdichter, der Abgasgegendruck im Abgasturbolader verringert werden. Dies hat eine geringe Ladungswechselarbeit zur Folge und führt zu einem geringeren Kraftstoffverbrauch der Brennkraftmaschine.

Die zuvor beschriebene Betriebsstrategie kann zudem auch beim Warmlaufen der Brennkraftmaschine eingesetzt werden. Ziel beim Warmlaufen ist eine möglichst geringe Enthalpieabsenkung an der Turbine des Abgasturboladers, wodurch der Abgasnachbehandlungsanlage mehr Enthalpie zur Verfügung steht und sich diese schneller aufheizt und damit auch schneller ihre Aktivierungstemperatur erreicht. Insgesamt kann somit die Warmlaufdauer reduziert werden, was Vorteile hinsichtlich einer Schadstoffemission durch die Brennkraftmaschine bringt.

Bei einer vorteilhaften Weiterbildung des erfindungsgemäßen Verfahrens ist die Regeleinrichtung als Wastegate- oder variable Turbinengeometrie ausgebildet, wobei ab einem vordefinierten Ladezustand des elektrischen Energiespeichers und/oder einer von dem Generator erzeugten elektrischen Leistung das Wastegateventil zumindest teilweise, vorzugsweise sogar gänzlich geöffnet, oder Leitschaufeln der variablen Turbinengeometrie so verstellt werden, dass sich ein maximaler Strömungsquerschnitt ergibt. Steht somit bei dem erfindungsgemäßen Betriebsverfahren genügend elektrische Energie im Kraftfahrzeug zur Verfügung, sei es beispielsweise durch einen entsprechenden Ladezustand des elektrischen Energiespeichers oder aber eine entsprechende Leistung des Generators, beispielsweise in einem Rekuperationsbetrieb, kann die nunmehr weiter erzeugte elektrische Energie dazu genutzt werden, die bisher vom Abgasturbolader erzeugte Verdichterleistung zumindest zu unterstützen, vorzugsweise sogar hauptsächlich zu ersetzen. Bei bisherigen Kraftfahrzeugen ohne das erfindungsgemäße Betriebsverfahren konnte viel elektrische Energie, beispielsweise in einem Rekuperationsbetrieb, nicht genutzt werden, wobei der Abgasturbolader trotzdem die Ladeluftleistung erbringen musste und eine dementsprechend großen Abgasgegendruck aufwies. Bei dem erfindungsgemäßen Betriebsverfahren ist nun diese überschüssige elektrische Energie optimal nutzbar, da hiermit der elektrisch betriebene Verdichter angetrieben wird und die hauptsächliche Verdichterarbeit übernehmen kann. In gleicher Weise, wie der elektrisch betriebene Verdichter Verdichtungsarbeit übernimmt bzw. Verdichtungsleistung erbringt, kann die seitens des Abgasturboladers zu erbringende Verdichterleistung zurückgefahren werden, beispielsweise indem ein Wastegateventil desselben geöffnet oder aber Leitschaufeln einer variablen Turbinengeometrie entsprechend eingestellt werden. Durch beide Maßnahmen kann der Abgasgegendruck im Abgasturbolader reduziert werden, wodurch die Arbeit (Ladungswechselarbeit) die die Brennkraftmaschine erbringen muss, um das Abgas aus den Zylindern auszuschieben, reduziert werden kann. Die Reduzierung dieser Arbeit reduziert zugleich auch den Kraftstoffverbrauch.

Zweckmäßig erzeugt der elektrisch betriebene Verdichter einen höheren Ladedruck als der Abgasturbolader. Dieses Merkmal ist besonders wichtig, da in einer besonderen Betriebsstrategie die hauptsächliche Ladearbeit bzw. Ladeluftleistung vom elektrisch betriebenen Verdichter erbracht werden, gleichzeitig der Abgasturbolader hinsichtlich des Abgasgegendrucks reduziert werden soll. Dadurch wird der Abgasgegendruck deutlich gesenkt und die Ladungswechselarbeit verringert. Je mehr Verdichterleistung dabei vom Zusatzverdichter allein aufgebracht werden kann, desto stärker kann der Abgasgegendruck durch öffnen des Wastegateventils oder aber einstellen der variablen Turbinengeometrie verringert werden.

Zweckmäßig wird bei dem erfindungsgemäßen Verfahren die Ladeluft in einer Warmlaufphase der Brennkraftmaschine primär mittels des elektrisch betriebenen Verdichters verdichtet und gleichzeitig die Regeleinrichtung in eine Stellung überführt, in welcher ein Abgasgegendruck des Abgasturboladers zumindest reduziert wird. Durch die primäre Ladeluftverdichtung mittels des elektrisch betriebenen Verdichters kann eine Enthalpieabsenkung im Bereich der Turbine und damit auch im Bereich des nachfolgenden Abgasstranges deutlich reduziert werden, wodurch sich der Abgasstrang und darin befindliche Komponenten, beispielsweise Katalysatoren, schneller Aufheizen und damit schneller ihre Betriebstemperatur erreichen. Selbstverständlich ist das Erbringen der primären Ladeluftleistung mittels des elektrisch betriebenen Verdichters ausschließlich dann möglich, sofern der elektrische Energiespeicher des Kraftfahrzeuges einen vordefinierten Ladezustand aufweist oder überschreitet.

Die vorliegende Erfindung beruht weiter auf dem allgemeinen Gedanken, ein Kraftfahrzeug mit einer Brennkraftmaschine und einem mittels einer Regeleinrichtung regelbaren Abgasturbolader sowie einem elektrisch betriebenen Verdichter auszustatten, und zusätzlich eine Steuereinrichtung vorzusehen, die derart ausgebildet ist, dass sie ab einem vordefinierten Ladezustand des elektrischen Energiespeichers und/oder einer von dem Generator erzeugten elektrischen Leistung den elektrischen Verdichter aktiviert, so dass in diesem Zustand die Ladeluft primär mittels des elektrisch betriebenen Verdichters verdichtet wird und gleichzeitig die Möglichkeit besteht, die Regeleinrichtung in eine Stellung zu überführen, in welcher ein Abgasgegendruck des Abgasturboladers zumindest reduziert wird. Durch die Steuereinrichtung und den elektrisch betriebenen Verdichter lässt sich nicht nur wie im vorherigen Absatz beschrieben, die Warmlaufphase reduzieren und damit der Schadstoffausstoß verringern, sondern es kann auch insgesamt ein energiesparender Betrieb des Kraftfahrzeuges erreicht werden, da insbesondere in einem Rekuperationsbetrieb, in welchem der Generator deutlich mehr elektrische Leistung erzeugt, als die üblichen Verbraucher im Kraftfahrzeug verbrauchen, der elektrisch betriebene Verdichter die Verdichterarbeit übernehmen und damit den Abgasturbolader zumindest entlasten kann. Durch die Entlastung des Abgasturboladers sinkt der Abgasgegendruck in diesem, wodurch die Brennkraftmaschine deutlich weniger Ladungswechselarbeit aufbringen muss, um Abgas aus den Zylindern auszustoßen und dadurch deutlich weniger Kraftstoff verbraucht.

Bei einer vorteilhaften Weiterbildung des erfindungsgemäßen Kraftfahrzeuges ist die Regeleinrichtung als Wastegateventil oder als variable Turbinengeometrie ausgebildet. Beide Regeleinrichtungen ermöglichen eine Senkung des Abgasgegendrucks im Bereich des Abgasturboladers, sofern genügend elektrische Energie zur Verfügung steht, um den elektrisch betriebenen Verdichter zu betreiben und darüber die primäre Ladeluftleistung zu erbringen.

## Patentansprüche

1. Verfahren zum Betrieb eines Kraftfahrzeugs mit einer Brennkraftmaschine mit einem mittels einer Regeleinrichtung regelbaren Abgasturbolader und einem elektrisch betriebenen Verdichter und mit einem elektrischen Energiespeicher sowie einem Generator zum Laden desselben, bei welchem ab einem vordefinierten Ladezustand des elektrischen Energiespeichers und/oder einer von dem Generator erzeugten elektrischen Leistung die Ladeluft primär mittels des elektrisch betriebenen Verdichters verdichtet wird und gleichzeitig die Regeleinrichtung in eine Stellung überführt wird, in welcher ein Abgasgegendruck des Abgasturboladers zumindest reduziert wird.

2. Verfahren nach Anspruch 1,
**dadurch gekennzeichnet,**
**dass** die Regeleinrichtung als Wastegateventil oder als variable Turbinengeometrie ausgebildet ist und dass ab einem vordefinierten Ladezustand des elektrischen Energiespeichers und/oder einer von dem Generator erzeugten elektrischen Leistung das Wastegateventil zumindest teilweise geöffnet oder Leitschaufeln der variablen Turbinengeometrie so verstellt werden, dass sich ein maximalen Strömungsquerschnitt ergibt.

3. Verfahren nach Anspruch 1 oder 2,
**dadurch gekennzeichnet,**
**dass** der elektrisch betriebene Verdichter einen höheren Ladedruck erzeugt als der Abgasturbolader.

4. Verfahren nach einem der Ansprüche 1 bis 3,
**dadurch gekennzeichnet,**
**dass** in einer Warmlaufphase der Brennkraftmaschine die Ladeluft primär mittels des elektrisch betriebenen Verdichters verdichtet und gleichzeitig die Regeleinrichtung in eine Stellung überführt wird, in welcher ein Abgasgegendruck des Abgasturboladers zumindest reduziert wird.

5. Kraftfahrzeug mit
- einer Brennkraftmaschine,
- einem mittels einer Regeleinrichtung regelbaren Abgasturbolader,
- einem elektrisch betriebenen Verdichter,
- einem elektrischen Energiespeicher sowie einem Generator zum Laden desselben,
- einer Steuereinrichtung, die derart ausgebildet ist, dass sie ab einem vordefinierten Ladezustand des elektrischen Energiespeichers und/oder einer von dem Generator erzeugten elektrischen Leistung den elektrischen Verdichter aktiviert, so dass die Ladeluft primär mittels desselben verdichtet wird und gleichzeitig die Regeleinrichtung in eine Stellung überführt, in welcher ein Abgasgegendruck des Abgasturboladers zumindest reduziert wird.

6. Kraftfahrzeug nach Anspruch 5,
**dadurch gekennzeichnet,**
**dass** die Regeleinrichtung als Wastegateventil oder als variable Turbinengeometrie ausgebildet ist.

7. Kraftfahrzeug nach Anspruch 5 oder 6,
**dadurch gekennzeichnet,**
**dass** der elektrisch betriebene Verdichter einen höheren Ladedruck erzeugt als der Abgasturbolader.
